Europäisches Patentamt

European Patent Office

Office européen des brevets

(19)

(11) Veröffentlichungsnummer: **0 232 812**
**B1**

(12) **EUROPÄISCHE PATENTSCHRIFT**

(45) Veröffentlichungstag der Patentschrift: 02.05.90

(21) Anmeldenummer: 87101267.0

(22) Anmeldetag: 30.01.87

(51) Int. Cl.⁵: **A 22 C 11/02**

(54) **Haltevorrichtung.**

(30) Priorität: 31.01.86 DE 3603001

(43) Veröffentlichungstag der Anmeldung:
**19.08.87 Patentblatt 87/34**

(45) Bekanntmachung des Hinweises auf die
Patenterteilung:
**02.05.90 Patentblatt 90/18**

(84) Benannte Vertragsstaaten:
**AT CH DE ES FR GB IT LI NL**

(56) Entgegenhaltungen:
**WO-A-83/00985**
**CH-A- 458 969**
**CH-A- 542 751**
**DE-A-2 605 745**
**DE-B-1 187 150**
**FR-A-2 242 031**

(73) Patentinhaber: **Albert Handtmann**
**Maschinenfabrik GmbH & Co. KG**
**Birkenallee 25-29**
**D-7950 Biberach a.d. Riss 1 (DE)**

(72) Erfinder: **Weerth, Hans-Ernst**
**Ränkle 18**
**D-7951 Winterstettenstadt (DE)**

(74) Vertreter: **Patentanwälte Grünecker, Kinkeldey,**
**Stockmair & Partner**
**Maximilianstrasse 58**
**D-8000 München 22 (DE)**

EP 0 232 812 B1

Courier Press, Leamington Spa, England.

**Beschreibung**

Die Erfindung betrifft eine Haltevorrichtung, die an eine Maschine zum Füllen und automatischen Abdrehen von Würsten anflanschbar ist und ein Bremsringgehäuse aufweist, das an einem in einem Führungsrohr geführten Lagerrohr befestigt ist und das in seiner Arbeitslage das freie Ende einer Abdrehtülle der Maschine umschließt und das unter Betätigung eines auf das Führungsrohr wirkenden Schwenkhebels aus dieser Arbeitslage derart wegschwenkbar ist, daß das freie Ende der Abdrehtülle frei zugänglich ist.

Eine derartige Haltevorrichtung ist im Stand der Technik bekannt. Eine solche Haltevorrichtung ermöglicht es, den Abdrehvorgang beim Abfüllen einzelner Portionen in Därme automatisch ablaufen zu lassen. An der Stirnseite einer Maschine zum Füllen und Abdrehen von Würsten befindet sich im allgemeinen das Abdrehgetriebe, aus welchem die Abdrehtülle horizontal herausragt. Auf diese Abdrehtülle wird zum Füllen die Darmraupe aufgehoben, die dann nachfolgend beim Füllen und Abdrehen allmählich abgezogen wird.

In der Arbeitslage übergreift die Haltevorrichtung das freie Ende der Abrehtülle mit dem Bremsgehäuse.

Weil das Bremsringgehäuse in der Arbeitslage das freie Ende der Abdrehtülle umschließen muß, damit die Bremswirkung erzeugt werden kann, ist dieses freie Ende der Abdrehtülle in dieser Arbeitslage nicht frei zugänglich. Zum Aufschieben neuer Darmraupen muß daher das Bremsringgehäuse weggeschwenkt werden können. Dies muß möglichst einfach und rasch erfolgen können, damit die ansich außerordentlich hohen Fülleistungen solcher Maschinen nicht sinnlos werden.

Zum Aufschieben einer neuen Darmraupe muß das Bremsringgehäuse zunächst axial verschoben werden können, so daß es das freie Ende nicht mehr in seiner Kontur aufnimmt, und es muß dann eine Winkelverschwenkung durchgeführt werden, damit das freie Ende der Abdrehtülle frei liegt.

Um dies zu erreichen ist es im Stand der Technik bekannt, das Lagerrohr längsverschieblich mit Hilfe von Gleitfedern gegenüber einem Führungsrohr zu lagern und zu führen. Der Antrieb des Lagerrohrs und damit auch des Bremsgehäuses zur Längsverschiebung geschieht dabei über einen in einer vertikalen Ebene verschwenkbaren Schwenkhebel, der ein Zahnrad trägt, welches in einen als Zahnstange ausgestalteten Teil des Lagerrohrs eingreift.

Diese Verschiebebewegung erfolgt in Längsrichtung des Lagerrohrs so weit, daß das Bremsringgehäuse das freie Ende der Abdrehtülle nicht mehr in seiner Kontur aufnimmt. Es sind dann Vorkehrungen getroffen, die es erlauben, daß das Bremsringgehäuse dann von Hand zur Seite weggeschwenkt werden kann.

Wesentlich für die Funktion einer solchen Haltevorrichtung ist es, daß das Bremsringgehäuse in seiner Arbeitsstellung bezüglich der Abdrehtülle außerordentlich genau achsparallel und in Längsrichtung festgelegt werden kann, damit die Bremse mit dem freien Ende der Abdrehtülle exakt zusammen arbeiten kann.

Mit Hilfe der bisher bekannten axialen Verschiebeführung unter Verwendung von Gleitfedern hat sich als im Hinblick auf die genaue Ausrichtung und die spielfreie Verschiebung des Lagerrohres noch verbesserungsfähig erwiesen.

DE—B—1 187 150 offenbart eine Vorrichtung bei der zum Aufschieben einen neuen Darmraupe auf die Abdrehtülle ein das Bremsgehäuse tragender Auflagetisch mittels eines einzigen Schwenkhebels zunächst axial verschoben und danach radial zur Abdrehtülle ausgeschwenkt wird.

Es ist Aufgabe der vorliegenden Erfindung, eine Haltevorrichtung der eingangs genannten Art im Hinblick auf die Einfachheit ihrer Handhabung und auf die Positionergenauigkeit des Bremsringgehäuses bezüglich der Abdrehtülle zu verbessern.

Diese Aufgabe wird bei einer Haltevorrichtung der eingangs genannten Art dadurch gelöst, daß das Führungsrohr eine Führungskulisse aufweist, in die wenigstens zwei Führugselemente eingreifen, die so gegeneinander versetzt und einstellbar an dem Lagerrohr befestigt sind, daß das eine Führungselement auf der einen Führungskante der Kulisse und das andere Führungselement auf der gegenüberliegenden Führungskante der Kulisse spielfrei geführt wird und daß die Führungskulisse in einem ersten Abschnitt so ausgebildet ist, daß das Lagerrohr gegenüber dem Führungsrohr eine Längsverschiebung ausführt und daß die Führungskulisse in einem zweiten Abschnitt derart ausgebildet ist, daß das Lagerrohr gegenüber dem Führungsrohr eine kombinierte Längs- und Schwenkverschiebebewegung ausführt.

Mit dieser Lösung ergibt sich eine spielfreie Führung des das Bremsringgehäuse tragenden Lagerrohrs bezüglich des Führungsrohres. Das Zusammenirken der beiden Führungselemente mit der Kulissenführung stellt sicher, daß das Lagerrohr außerordentlich genau in der Arbeitslage das Bremsringgehäuse immer gleichbleibend exakt nach einem erfolgten Abschwenkvorgang auf die zuvor justierte Stellung der Arbeitslage zurückführt. Die Unterteilung der Kulissenführung in einen parallel verlaufenden Abschnitt, in dem lediglich eine Längsverschiebung bewirkt wird und einen gekrümmten Abschnitt, in dem eine kombinierte Längs- und Schwenkverschiebebewegung des Bremsringgehäuses erzielt wird, ermöglicht es, mit dem Schwenkhebel allein das Bremsringgehäuse von der Arbeitslage weg in die weggeschwenkte Stellung und umgekehrt zu verschieben, ohne daß etwa zum Wegschwenken des Bremsringgehäuses ein zusätzlicher Handgriff erforderlich wäre.

Dieses automatische Wegschwenken mit Hilfe des Schwenkhebels erhaubt somit ein schnelleres Arbeiten der Maschine. Nach dem Aufschieben einer neuen Darmraupe wird durch einen einzi-

gen Handgriff automatisch das Bremsringge- häuse dann wieder exakt in seine eingestellte Lage bezüglich des freien Endes der Abdrehtülle geführt und dort exakt positioniert.

In vorteilhafter Weiterbildung der Erfindung ist eine Arretierung vorgesehen, mit der das Lagerrohr in der Arbeitslage gegen eine Längsverschiebung gesichert ist. Diese Arretierung kann beispielsweise eine federbeaufschlagte Andrückrolle sein, die in er Arbeitslage in eine am Lagerrohr entsprechend ausgebildete Rastnut eingreift. Mit Hilfe einer solchen Arretierung wird das Lagerrohr automatisch in der Arbeitslage des Brems- ringgehäuses exakt gegen eine Längsverschie- bung gesichert und fixiert. Die Fixierung mit Hilfe einer Andrückrolle erfolgt automatisch, ohne daß hierzu ein Handgriff erforderlich ist.

In vorteilhafter Weiterbildung ist vorgesehen, daß die Andrückrolle in Längsrichtung verstellbar ist. Dies kann z.B. dadurch erzielt werden, daß die Andrückrolle in einer auf das Führungsrohr in Längsrichtung verstellbaren Rollenhalterung angeordnet wird. Diese Ausgestaltung ermöglicht es in einfacher Art und Weise, die axiale Lage des Bremsringgehäuses bezüglich des freien Endes der Abdrehtülle präzise und einfach einzustellen bzw. zu justieren.

Eine weitere Ausgestaltung der Erfindung sieht vor, daß als Führungselemente Rollen verwendet werden. Die Rollen bieten des Vorteil, daß sie eine sehr reibungsarme und daher leichtgängige Verschiebung des Lagerrohres bezüglich des Führungsrohres ermöglichen. Um eine genaue Justierung vornehmen zu können, können die Rollen mit einstellbarer Exzentrizität auf einem Lagerbolzen gelagert sein. dies kann z.B. dadurch geschehen, daß der Lagerbolzen den Innenring des Rollenlagers mit Spiel durchsetzt und mit seinem Kopf beim Einschrauben auf den Innenring wirkt. Damit ist es möglich, vor dem Anschrauben des Lagerbolzens die Rolle in Anlage an der ihr zugeordneten Führungskante der Kulisse zu bringen und zwar derart, daß sich die gewünschte Position des Bremsringgehäuses bezüglich der Abdrehtülle einstellt. In Kombination mit der verstellbaren Arretiermöglichkeit in Längsrichtung läßt sich damit auch die Position quer zur Längsachse der Abdrehtülle exakt und einfach justieren.

Eine weitere vorteilhafte Ausgestaltung der Erfindung sieht vor, daß im Führungsrohr eine kreisbogensegmentförmig verlaufende Durchbrechung vorgesehen ist, die konzentrisch zu einem außerhalb des führungsrohres angeordneten Lagerbolzen verläuft, an dem der Schwenkhebel und ein kürzerer Arm, der auf das Lagerrohr wirkt, drehfest angelegt sind. Durch diese Art der Bewegungsübertragung mit der Hebelübersetzung von dem Schwenkhebel auf den kürzeren Arm, der dann auf das Lagerrohr wirkt, wird erreicht, daß die Betätigungskraft beim Wegschwenken der Haltevorrichtung und in umgekehrter Richtung gering ist. Die kreisbogen- segmentförmige Durchbrechung im Führungs- rohr ermöglicht es, durch das Führungsrohr hindurch die Antriebsübertragung auf das Lagerrohr mit Hilfe des kürzeren Armes durchzuführen.

Weiterhin ist es in diesem Zusammenhang von Vorteil, wenn der Lagerbolzen für den Schwenkhebel vertikal verlaufend an einem Gehäuse der Haltevorrichtung gelagert ist. Dabei wird der Lagerbolzen somit möglichst weit von dem Führungsrohr bzw. Lagerrohr angeordnet, was zur Folge hat, daß die kreisbogensegmentförmig verlaufende Durchbrechung relativ flach verlaufen kann, was im Hinblick auf eine geringe Schwenkhebelbetätigungskraft von Vorteil ist.

In weiterer Ausgestaltung der Erfindung ist der Lagerbolzen vertikal gerichtet und es erfolgt die Verschwenkung des Schwenkhebels in der Horizontalebene. Der Schwenkhebel kann durch diese Maßnahme von der Bedienungsperson ergonomisch günstig betätigt werden. Die Verschwenkbewegung findet dabei in der Horizontalebene statt. Der Schwenkhebel behindert dadurch trotz einer relativ großen Länge, beispielsweise der dreifachen Länge des kürzeren Armes, nicht das Anfügen eines Arbeitstisches oder dergl. zum Auffangen der abgefüllten und abgedrehten Würste.

Die Übertragung der Schwenkbewegung des Schwenkhebels mittels des auf das Lagerrohr wirkenden kürzeren Armes geschieht in vorteilhafter Weiterbildung dadurch, daß der kürzere Arm an seinem freien Ende eine Gleitrolle trägt, die durch die Durchbrechung hindurch in eine senkrecht zur Längsachse des Lagerrohrs laufende Nut eingreift. Die beim Verschwenken in der so geschaffenen senkrecht verlaufenden Nut auf- und abfahrende Rolle (je nach Schwenkrichtung) liegt dabei zur Antriebsübertragung je nach Schwenkrichtung entweder an der vorderen oder hinteren begrenzungswand der Nut an. Damit das Abrollen der Gleitrolle in der Nut in beiden Richtungen ohne Beeinträchtigung möglich ist, ist die Nut in Längsrichtung des Lagerrohrs gesehen etwas breiter als der Gleitrollendurchmesser. In diesem Zusammenhang ist es auch von Vorteil, wenn die Nut in radialer Richtung des Lagerrohres um so viel breiter als die Gleitrolle ist, daß das Lagerrohr um den gewünschten Weg verschwenkt werden kann, ohne daß die Innenwand der Nut zur Anlage an der Gleitrolle kommt.

Um die Führungselemente, die Nut für die Gleitrolle des kürzeren Schwenkarmes und auch die Rastnut an dem Lagerrohr ausbilden zu können, sieht eine Weiterbildung der Erfindung vor, daß das Lagerrohr zu dem dem Bremsringgehäuse abgewandten Ende hin massiv ausgebildet ist. In diesem massiven Teil können die entsprechenden Nuten und auch die Lagerung der Führungselemente ausreichend fest eingebracht bzw. vorgenommen werden.

Die Erfindung wird im folgenden anhand des in den Zeichnungen dargestellten Ausführungsbeispiels weiter erläutert und beschrieben.

Figur 1 zeigt eine perspektivische, schemati- sche Ansicht einer Wurstabfüllmaschine mit einer erfindungsgemäß ausgebildeten und angeordneten Haltevorrichtung,

Figur 2 zeigt einen Schnitt durch die Haltevorrichtung etwa entlang der Linie II—II der Figur 1,

Figur 3 zeigt die Haltevorrichtung im Schnitt entlang der Linie III—III der Figur 1,

Figur 4 zeigt im Detail die Lagerung eines Führungselementes in einer Querschnittsdarstellung durch Lagerrohr und Führungsrohr entlang der Linie IV—IV der Figur 3 und

Figur 5 zeigt einen Schnitt durch die Haltevorrichtung entlang der Linie V—V der Figur 2, wobei die in der Kulisse geführten Rollen weggelassen sind.

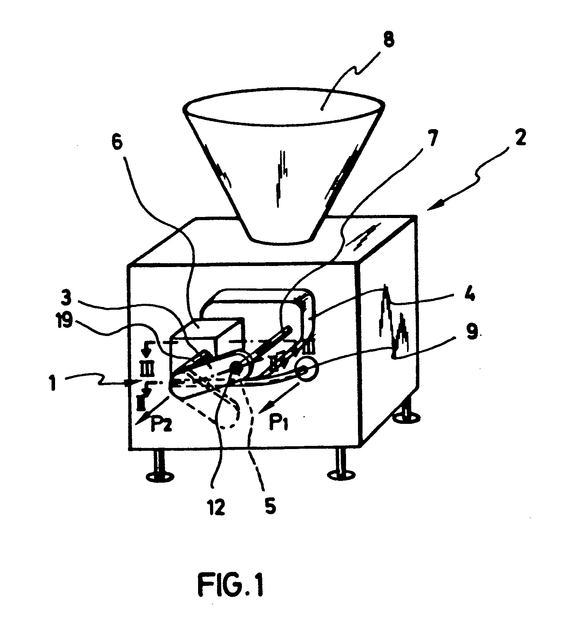

Anhand von Figur 1 soll zunächst die Aufgabe und prinzipielle Funktion der erfindungsgemäßen Haltevorrichtung erläutert werden. Das Bezugszeichen 2 bezeichnet in der Figur 1 als Ganzes eine Maschine zum Füllen und automatischen Abdrehen von Würsten.

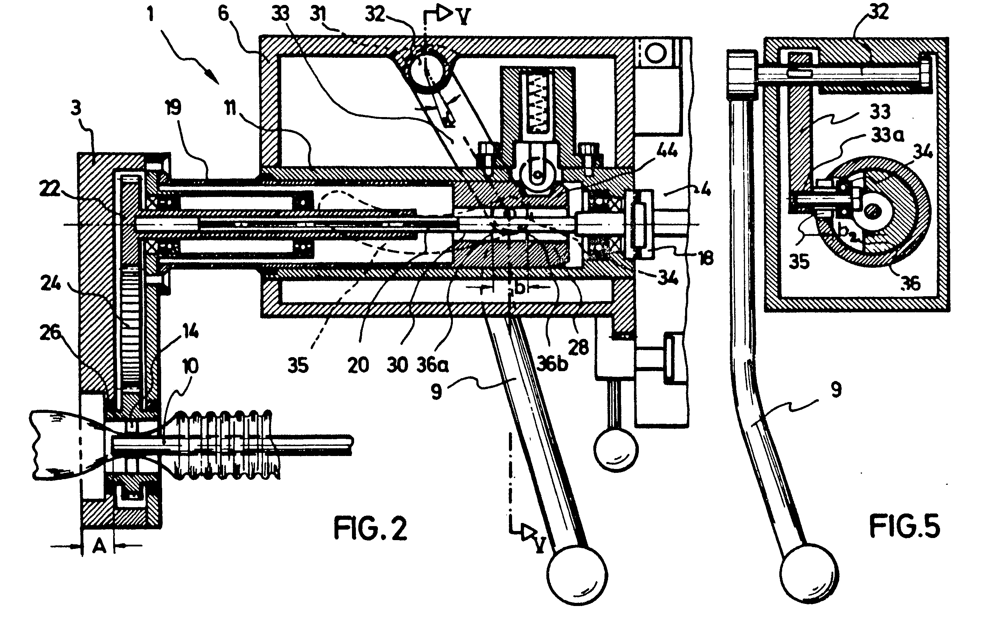

Die Maschine wird über einen Fülltrichter 8 mit Wurstbrät beschickt, welches dann mit Hilfe nicht näher dargestellter Einrichtungen zum Portionieren bzw. Abfüllen in Wurstdärme durch die Abdrehtülle 7 ausgestoßen wird. Zum Abfüllen in Därme wird eine Darmraupe 10 (vgl. Figur 2) vom vorderen freien Ende 5 der Abdrehtülle 7 her auf die Abdrehtülle aufgezogen. Nach dem Ausstoßen einer eingestellten Portion wird die Abdrehtülle 7 durch ein in dem Gehäuse 4 angeordnetes Abdrehgetriebe um die eigene Achse gedreht, um eine Einschnürung der abgefüllten Portion zu erreichen.

Um nun diesen Füll- und Abdrehvorgang vollautomatisch ablaufen zu lassen, ist die an der Maschine angeordnete und insgesamt mit 1 bezeichnete Haltevorrichtung vorgesehn. Die Haltevorrichtung 1 weist ein Bremsringgehäuse 3 auf, das in der in Figur 1 durchgezogen dargestellten Arbeitslage das freie Ende 5 der Abdrehtülle in einer Durchgangsöffnung 12 umschließt. In der Durchgangsöffnung 12 ist das Bremsringgehäuse 3 mit einem Bremsring 14 ausgestattet, der beim Füllvorgang die Darmraupe 10 in ihrer Abzugsbewegung etwas bremst und so für die notwendige Spannung des zu füllenden Darmes sorgt. Damit die Abdrehtülle beim Abdrehvorgang nicht durchrutscht, ohne den Darm mitzunehmen, ist der Bremsring 14 außerdem durch das Bremsringgehäuse und die Haltevorrichtung hindurch mit einem Getriebe antreibbar, und zwar mit der Drehgeschwindigkeit der Abdrehtülle 7. Während also die Abdrehtülle innerhalb des Darmes die Drehbewegung ausführt, wird der Darm von außen her von dem Bremsring erfaßt und synchron mit der Drehung der Abdrehtülle somit zuverlässig abgedreht.

Damit der Bremsring einerseits zwar die Darmraupe beim Abziehen bremst, andererseits aber nicht einklemmt, und damit der Bremsring außerdem beim eigentlichen Abdrehvorgang den Darm von außen mit abdrehen kann, ist eine außerordentlich genaue und exakte Positionierung des Bremsring um das freie Ende 5 der Abdrehtülle herum erforderlich.

Andererseits muß aber die Abdrehtülle 7 vom vorderen Ende 5 her mit neuen Darmraupen von Zeit zu Zeit beschickt werden könne. Daher muß das Bremsringgehäuse aus der Arbeitslage so weg verschoben werden können, daß neue Darmraupen ohne Behinderung aufgezogen werden können. Es muß dann aber auch wieder möglich sein, daß Bremsringgehäuse nach dem Aufziehen einfach und mit exakter Positionerung wieder in seine Arbeitslage führen zu können. Die Erfindung ermöglicht dies in der weiter unten nun im folgenden detaillierter beschriebenen Art und Weise.

Durch die Erfindung wird es möglich, daß durch Verschwenken des Schwenkhebels 9 in einer Horizontalebene in Pfeilrichtung $P_1$ das Lagerrohr 19 zunächst aus dem Gehäuse 6 der Halteeinrichtung 1 in einer Längsverschiebung in Pfeilrichtung $P_2$ herausgeschoben wird und damit das Bremsringgehäuse 3 zu dem freien Ende 5 der Abdrehtülle 7 so verschoben wird, daß dieses Ende frei liegt. Anschließend wird durch Weiterverschwenken des Schwenkhebels 9 in derselben Ebene $P_1$ eine Verschwenkbewegung des Lagerrohrs 19 und damit des Bremsringgehäuses 3 nach unten in die in Figur 1 gestrichelte Position erzielt. Beim Verschwenken des Schwenkhebels entgegen der Pfeilrichtung $P_1$ laufen diese Vorgänge umgekehrt ab.

In dem Horizontalschnitt in Figur 2 sind Einzelheiten der erfindungsgemäßen Haltevorrichtung 1 zu erkennen. Wie dort zu sehen ist, sitzt in dem auf das Abdrehgetriebe 4 aufflanschbaren Gehäuse 6 der Haltevorrichtung 1 ein Führungsrohr 11, in dem das Lagerrohr 19 gleitverschieblich geführt ist. Das Lagerrohr 19 trägt an dem vorderen, aus dem Gehäuse 6 herausragenden Ende unverdrehbar das Bremsringgehäuse 3. Vom Abdrehgetriebe 4 aus wird der Antrieb des Bremsrings 14 über die Kupplung 18, die das Lagerrohr 19 durchsetztende Profilwelle 20, das Zahnrad 22, das Zwischenzahnrad 24 und das Zahnrad 26 vorgenommen. Die Profilwelle 20 ist einem korrespondierend ausgebildeten Ansatz 22a des Zahnrades 22 längsverschieblich aufgenommen, so daß ohne Lösen der Antriebsverbindung das Lagerrohr 19 längsverschoben werden kann.

Das Lagerrohr 19 ist an seinem dem Gehäuse zugewandten Ende 28 massiv ausgebildet, abgesehen von einer zentralen Bohrung 30, durch die die Profilwelle 20 hindurchtritt. Über diesen massiven Teil des Lagerrohres 19 wird der Antrieb und die Führung beim Verschieben vorgenommen. Wie man aus Figur 2 im Zusammenhang mit Figur 5 erkennen kann, ist im Gehäuse 6 an einer von dem Lagerrohr 19 und dem Führungsrohr 11 entfernten Stelle eine Lagerung 31 für einen Lagerbolzen 32 vorgesehen. An dem Lagerbolzen 32 ist der Schwenkhebel 9 und ein kürzerer, im Gehäuse liegender Arm 33 drehfest angelegt. Die Anlenkung ist so vorgenommen, daß der kürzere Arm einen spitzen Winkel α zum Schwenkhebel bildet. Am freien Ende 33a trägt der kürzere Arm 33 eine Gleitrolle 34. Die Gleitrolle greift durch eine kreisbogensegmentförmig verlaufende Durchbrechung 35 in der Wand des Führungsrohres 11 hindurch in eine quer zur Längsachse des Lagerrohrs 19 verlaufende Nut 36 ein. Die Nut erstreckt sich, wie Figur 5 zeigt, im wesentlichen über den Durchmesser des massiven Teils des Lagerrohrs 19. In Längsrichtung gesehen weist die Nut eine Breite b auf (vgl. Figur 2), die etwas größer als der Durchmesser der Gleitrolle 34 ist. Beim Verschwenken mittels des Schwenkhebels 9 läuft die Gleitrolle je nach Schwenkrichtung entweder an der einen Begrenzungswand 36a der Nut entlang oder aber bei der umgekehrten Schwenkbewegung an der Begrenzungswand 36b und überträgt somit die Antriebskraft auf das Lagerrohr 19 in den jeweiligen Richtungen. Die Breite b2 in Radialrichtung der Nut ist so bemessen, daß noch ausreichend Spielraum für eine Verschwenkbewegung des Lagerrohrs verbleibt, ohne die Gleitrolle zu beeinträchtigen.

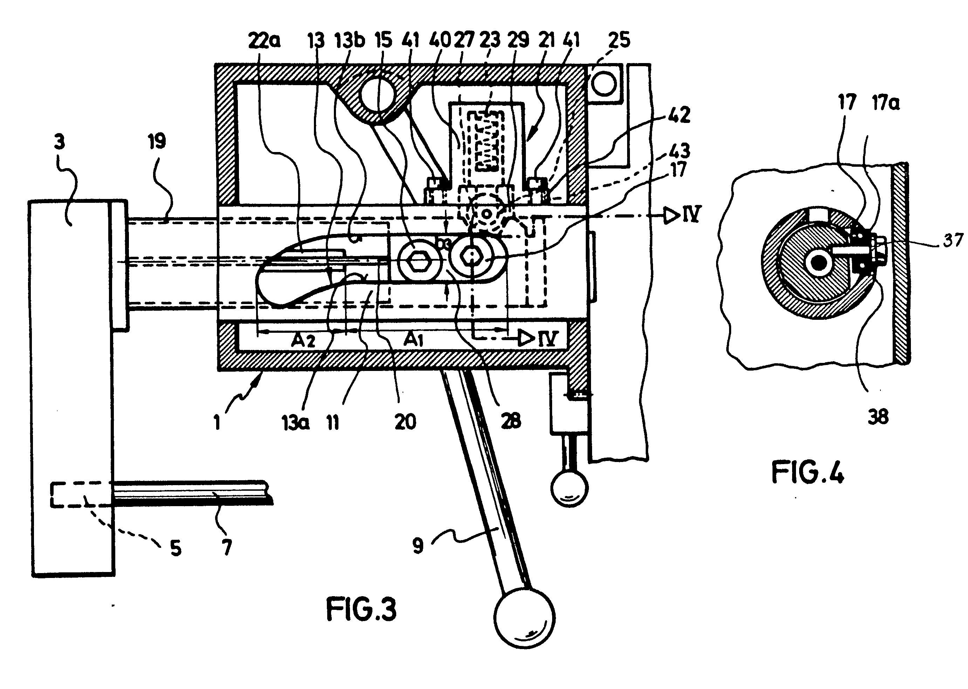

Wie sich aus Figur 3 erkennen läßt, ist das Führungsrohr 11 auf der der Durchbrechung 35 etwa gegenüberliegenden Seite mit einer Führungskulisse 13 ausgestattet. In den massiven Teil 28 sind (vgl. Figur 4) zwei Führungselemente 15 und 17 eingeschraubt, die mit der Führungskulisse 13 zusammenwirken. Die Führungselemente 15 und 17 sind als Rollen ausgebildet. Die Breite $b_3$ der Führungskulisse 13 ist größer als der Durchmesser der Rollen 15 bzw. 17. Die Rollen 15 und 17 liegen in Längsrichtung gesehen hintereinander, sind jedoch in Umfangsrichtung des Lagerrohrs 19 versetzt zueinander. Dabei wirkt die Rolle 15 mit der Führungskante 13a der Führungskulisse 13 und die Rolle 17 mit der gegenüberliegenden Führungskante 13b zusammen. Die Rollen sind einstellbar. Dies wird, wie Figur 5 in der Schnittdarstellung erkennen läßt, z.B. dadurch möglich, daß die Rollen 17 mit Hilfe eines Bolzens 37 an dem massiven Ende 28 befestigt werden, der über eine Unterlagscheibe 38 auf den Innenring 17a der Rolle wirkt. Der Bolzen 37 ist so bemessen, daß er das Rollenlager mit Radialspiel durchsetzt. Dadurch ist es möglich, vor dem Anziehen des Bolzens das Lager gegen die ihm jeweils zugeordnete Führungskante in Anlage zu bringen und dann durch Anziehen des Bolzens zu fixieren. Wenn beide Rollen so jeweils in Anlage an den ihnen zugeordneten Führungskanten fixiert worden sind, ist das Lagerrohr zwangsläufig ohne jegliches Verdrehspiel gelagert und geführt.

In einem ersten Abschnitt $A_1$ verlaufen die Führungskanten 13a und 13b parallel zur Längsachse des Lagerrohrs 19, so daß das Lagerrohr beim Verschieben über diesen Abschnitt ohne jegliche Drehbewegung allein in einer Längsverschiebung gegenüber dem Führungsrohr 11 geführt wird. In einem zweiten Abschnitt $A_2$ verläuft die Führungskulisse 13 gekrümmt, so daß sich bei Anlage der Rollen an diesem gekrümmten Abschnitt zwangsläufig eine Schwenkbewegung des Lagerrohrs 19 gegenüber dem Führungsrohr 11 ergibt. Dadurch wird, wenn die Schwenkbewegung mit Hilfe des Schwenkhebels 9 so weit fortgeführt wird, daß der Abschnitt $A_1$ durchlaufen worden ist, automatisch durch Weiterbewegen des Hebels 9 in derselben Ebene das Wegschwenken des Bremsringgehäuses 3 in die in Figur 1 gestrichelt dargestellte Position bewirkt.

Beim Zurückschwenken des Schwenkhebels 9 wird aufgrund der spielfreien Führung der Rollen in der Führungskulisse und damit des Lagerrohrs erreicht, daß sich die einmal eingestellte Position des Bremsringgehäuses gegenüber dem freien Ende 5 der Abdrehtülle 7 exakt einstellt.

Um das Lagerrohr 19 auch in axialer Richtung der Abdrehtülle 7 exakt festzuhalten bzw. positionieren zu können, ist auf dem Führungsrohr innerhalb des Gehäuses 6 eine Arretiereinrichtung 21 aufgeflanscht. Die Arretiereinrichtung 21 umfaßt eine Andrückrolle 25, die in Radialrichtung des Lagerrohrs 19 mit Hilfe der Andrückfeder 23 beaufschlagt ist. Die Andrückrolle 25 erstreckt sich durch eine im Führungsrohr an entsprechender Stelle eingebrachte Öffnung 29 hindurch in eine wannenförmige oder auch V-förmige Rastnut 27 hinein. Diese Rastnut 27 ist so bemessen, daß der Radialweg der Andrückrolle 25 durch Aufsitzen an den beiden ansteigenden Flanken der Wanne 27 begrenzt wird, bevor die Rolle den Nutboden erreicht. Wenn das Lagerrohr 19 die in den Figuren 2 und 3 dargestellte Lage einnimmt (Arbeitslage des Bremsringgehäuses), positioniert und fixiert die Andrückrolle 25 automatisch das Lagerrohr 19 in Längsrichtung, so daß das Bremsringgehäuse auch in dieser Richtung exakt die einmal eingestellte Lage bezüglich der Abdrehtülle 7 einnimmt.

Zur Justierung in Längsrichtung ist die Feder 23 und die Andrückrolle 25 in einer Rollenhalterung 40 untergebracht. Die Rollenhalterung weist einen Flansch 42 auf, in dem Bohrungen 43 vorgesehen sind, die von Schraubbolzen 41 durchsetzt werden. Der Durchmesser der Bohrungen ist so bemessen, daß die Schraubbolzen 41 diese Bohrungen mit Spiel durchsetzen, so daß das Gehäuse 40 und damit auch die Andrückrolle 25 in Axialrichtung des Führungsrohrs verschiebbar bzw. einstellbar ist. Dadurch läßt sich somit der in Figur 2 mit A bezeichnete Abstand zwischen freiem Ende der Abdrehtülle 7 und der Vorderfläche des Bremsringgehäuses exakt einstellen.

Mit dieser Haltevorrichtung kann nun wie folgt gearbeitet werden:

Zunächst kann durch Lösen und Justieren der Rollen 15 und 17 sowie der Schrauben 41 für die Andrückrolle 25 das Bremsringgehäuse 3 in die jeweils für die zur verarbeitende Dramsorte und/ oder Brätsorte optimale Position des Bremsringgehäuses 3 gegenüber der Abdrehtülle 7 sowohl in axialer Richtung als auch in Umfangsrichtung exakt eingestellt werden. Nach der erfolgten axialen Justierung werden die Schrauben 41 angezogen. Wenn die gewünschte Position senkrecht zur Axialrichtung eingestellt ist, werden die Rollen 15 und 17 jeweils unter Anlage an der ihnen zugeordneten Führungskante festgeschraubt und fixiert. Das Bremsringgehäuse 3 nimmt nun die angestrebte Position gegenüber der Abdrehtülle 7 ein. Durch Ergreifen des Hebels 9 kann nun das Bremsringgehäuse zunächst längs und dann in einer kombinierten Längs- und Schwenkbewegung von der Abdrehtülle weggeschoben werden. Die zum Umschwenken benötigte Kraft ist äußerst gering aufgrund der Hebelübersetzung zwischen dem kürzeren Arm und dem Schwenkhebel selbst. Auch der aufgrund des relativ großen Abstandes zwischen dem Lagerbolzen 32 und dem Führungsrohr erhaltene Abstand und der dadurch bedingte flache Verlauf der kreisbogensegmentförmigen Durchbrechung 35 konzentrisch zum Lagerbolzen trägt dazu bei.

Durch die lediglich in der Horizontalebene vorzunehmende Verschwenkbewegung des Schwenkhebles 9 bis in die Endstellung wird dann das Bremsringgehäuse automatisch weggeschwenkt. Nunn kann eine Darmraupe aufgezogen werden. Durch erneutes Umlegen des Schwenkhebles 9 in der entgegengesetzten Richtung wird aufgrund der spielfreien Führung und auch aufgrund der Axialsicherung dann zwangsläufig wieder die einmal eingestellte Arbeitslage eingestellt. Kurz vor Erreichen dieser Position gleitet die Gleitrolle 25 auf der abgeschrägten Kante 44 (vgl. Fig. 2) des massiven Teils des Lagerrohrs 19 auf und schnappt dann in die Rastnut bei der Fortführung de Schwenkbewegung ein. Dies garantiert, daß auch in axialer Richtung exakt die engestellte Position wieder erhatlen wird.

Da die Verschwenkbewegung des Hebels 9 lediglich in einer Ebene erfolgen muß, um das Bremsringgehäuse längsverschieben als auch wegschwenken zu können, läßt sich dies einfach und ohne großen Aufwand in einer flüssigen und damit ergonomisch günstigen Handbewegung ausführen.

Aufgrund des beschriebenen Lösung wird ferner ein spielfreies Halten des Bremsringgehäuses in der Arbeitsstellung erzielt, und es ist auch eine präzise und gut zu handhabende Einstell- bzw. Justiermöglichkeit des Bremsringgehäuses gegeben.

Die Betätigungs- und Führungselemente bei dieser Haltevorrichtung sind robust, platzsparend und von einfacher Konstruktion. Insbesondere kann auch ein großer Lagerrohrdurchmesser realisiert werden, was weiterhin die stabile Positionierung des Bremsringgehäuses sicherstellt. Die Haltevorrichtung baut insgesamt flach. Insbesondere wird trotz des langen Schwenkhebels kein Raum unterhalb der Haltevorrichtung beansprucht, so daß ein Arbeitstisch mit relativ großer Höhe unter die Haltevorrichtung gefahren werden kann, was in einfacheres Arbeiten als mit niedrigeren Tischen ermöglicht.

**Patentansprüche**

1. Haltevorrichtung, die an eine Maschine zum Füllen und automatischen Abdrehen von Würsten anflanschbar ist und eine Bremsringgehäuse aufweist, das an einem in einem Führungsrohr geführten Lagerrohr befestigt ist und das in seiner Arbeitslage das freie Ende einer Abdrehtülle der Maschine umschließt und das unter Betätigung eines auf das Führungsrohr wirkenden Schwenkhebels aus dieser Arbeitslage derat wegbewegbar ist, daß das freie Ende der Abdrehtülle frei zugänglich ist, dadurch gekennzeichnet, daß das Führungsrohr (11) eine Führungskulisse (13) aufweist, in die wenigstens zwei Führungselemente (15, 17) eingreifen, die so gegeneinander versetzt und einstellbar an dem Lagerrohr (19) befestigt sind, daß das eine Führungselement (15) auf der einen Führungskante (13a) der Kulisse (13) und das andere Führungselement (17) auf der gegenüberliegenden Führungskante (13b) der Führungskulisse (13) spielfrei geführt wird und daß die Führungskulisse (13) in einem ersten Abschnitt ($A_1$) so ausgebildet ist, daß das Lagerrohr (19) gegenüber dem Führungsrohr (11) eine Längsverschiebung ausführt und daß die Führungskulisse (13) in einem zweiten Abschnitt ($A_2$) derart ausgebildet ist, daß das Lagerrohr (19) gegenüber dem Führungsrohr (11) eine kombinierte Längs- und Schwenkverschiebebewegung ausführt.

2. Haltevorrichtung nach Anspruch 1, dadurch gekennzeichnet, daß eine Arretierung (21, 23, 25, 27) vorgesehen ist, mit der das Lagerrohr (19) in der Arbeitslage gegen eine Längsverschiebung gesichert ist.

3. Haltevorrichtung nach Anspruch 2, dadurch gekennzeichnet, daß als Arretierung (21) eine federbeaufschlagte Andrückrolle (23, 25) vorgesehen ist, die in der Arbeitslage in eine am Lagerrohr (19) entsprechend ausgebildete Rastnut (27) angreift.

4. Haltevorrichtung nach Anspruch 3, dadurch gekennzeichnet, daß die Andrückrolle (25) in Längsrichtung verstellbar angeordnet ist.

5. Haltevorrichtung nach Anspruch 3 oder 4, dadurch gekennzeichnet, daß die Andrückrolle in einer auf dem Führungsrohr in Längsrichtung verstellbaren Rollhalterung (29) gehalten ist.

6. Haltevorrichtung nach einem der vorangegangenen Ansprüche, dadurch gekennzeichnet, daß als Führungselemente Rollen (15, 17) verwendet werden.

7. Haltevorrichtung nach Anspruch 6, dadurch gekennzeichnet, daß die Rollen (15, 17) mit einstellbarer Exzentrizität auf einem Lagerbolzen (37) gelagert sind.

8. Haltevorrichtung nach wenigstens einem der vorangegangenen Ansprüche, dadurch gekennzeichnet, daß im Führungsrohr (11) eine kreisbogensegmentförmig verlaufende Durchbrechung (35) vorgesehen ist, die konzentrisch zu einem außerhalb des Führungsrohres (11) angeordneten Lagerbolzen (32) verläuft, an dem der Schwenkhebel (9) und ein kürzerer Arm (33), der auf das Lagerrohr (19) wirkt, drehfest angelenkt sind.

9. Haltevorrichtung nach Anspruch 8, dadurch gekennzeichnet, daß der Lagerbolzen (32) für den Schwenkhebel (9) vertikal verlaufend an einem Gehäuse (6) der Haltevorrichtung (1) gelagert ist.

10. Haltevorrichtung nach Anspruch 8 oder 9, dadurch gekennzeichnet, daß der Lagerbolzen (32) für den Schwenkhebel (9) wit von dem Führungsrohr (11) bzw. Lagerrohr (19) entfernt angeordnet ist.

11. Haltevorrichtung nach wenigstens einem der vorangegangenen Ansprüche, dadurch gekennzeichnet, daß die Verschwenkung des Schwenkhebels (9) in einer Horizontalebene erfolgt.

12. Haltevorrichtung nach wenigstens einem der vorangegangenen Ansprüche, dadurch gekennzeichnet, daß der Schwenkhebel (9) etwa die dreifache Länge des kürzeren Armes (33) aufweist.

13. Haltevorrichtung nach Anspruch 8, dadurch gekennzeichnet, daß der kürzere Arm (33) an seinem freien Ende eine Gleitrolle (34) trägt, die durch die Durchbrechung (35) hindurch in eine senkrecht zur Längsachse des Lagerrohrs (19) verlaufende Nut (36) eingreift.

14. Haltevorrichtung nach Anspruch 13, dadurch gekennzeichnet, daß die Nut (36) in radialer Richtung des Lagerrohres (19) breiter ($b_2$) als die Gleitrolle ist.

15. Haltevorrichtung nach wenigstens einem der vorangegangenen Ansprüche, dadurch gekennzeichnet, daß das Lagerrohr (19) zu dem dem Bremsringgehäuse abgewandten Ende hin massiv (28) ausgebildet ist.

**Revendications**

1. Dispositif de retenue, lequel peut être bridé sur une machine à remplir des boyaux et à confectionner automatiquement des saucisses et comporte un carter à bague de freinage qui, fixé à un tube de montage guidé dans un tube de guidage, enferme dans sa position de travail l'extrémité libre d'une douille de resserrement par torsion et peut, par actionnement d'un levier pivotant agissant sur le tube de guidage, être écarté de cette position de travail de façon que l'extrémité libre de la douille de resserrement par torsion soit librement accessible, caractérisé en ce que le tube de guidage (11) présente une coulisse (13) dans laquelle s'engagent au moins deux éléments de guidage (15, 17) qui sont décalés l'un par rapport à l'autre et fixés de manière réglable au tube de montage (19) de telle sorte qu'un élément de guidage (15) est guidé sans jeu au contact de l'un (13a) des bords de guidage de la coulisse (13) et l'autre élément de guidage (17) est guidé sans jeu au contact du bord de guidage opposé (13b) de la coulisse (13) et en ce que la coulisse (13) est réalisée dans une première partie ($A_1$) de telle façon que le tube de montage (19) effectue par rapport au tube de guidage (11) un coulissement longitudinal et en ce que la coulisse (13) est réalisée dans une deuxième partie ($A_2$) de telle façon que le tube de montage (19) effectue par rapport au tube de guidage (11) un mouvement combiné de coulissement longitudinal et de basculement.

2. Dispositif de retenue selon la revendication 1, caractérisé en ce qu'il est prévu un mécanisme de blocage (21, 23, 25, 27) au moyen duquel le tube de montage (19) est empêché dans la position de travail d'effectuer un coulissement longitudinal.

3. Dispositif de retenue selon la revendication 2, caractérisé en ce qu'il est prévu en tant que mécanisme de blocage (21) un galet presseur (25) sollicité par un ressort (23) et qui dans la position de travail vient en prise dans une rainure d'arrêt (27) réalisée en conséquence dans le tube de montage (19).

4. Dispositif de retenue selon la revendication 3, caractérisé en ce que le galet presseur (25) est monté de façon à être réglable dans la direction longitudinale.

5. Dispositif de retenue selon la revendication 3 ou 4, caractérisé en ce que le galet presseur est retenu dans un porte-galet (29) réglable en direction longitudinale sur le tube de guidage.

6. Dispositif de retenue selon l'une quelconque des revendications précédentes, caractérisé en ce que des rouleaux (15, 17) sont uitilisés en tant qu'éléments de guidage.

7. Dispositif de retenue selon la revendication 6, caractérisé en ce que les rouleaux (15, 17) sont montés avec un excentricité réglable sur une cheville (37).

8. Dispositif de retenue selon au moins l'une quelconque des revendications précédentes, caractérisé en ce que dans le tube de guidage (11) est prévu un passage (35) en forme de segment circulaire qui s'étend concentriquement à un axe de montage (32) disposé á l'extérieur du tube de guidage (11), auquel axe sont reliés de manière fixe en rotation le levier pivotant (9) et un bras plus court (22) qui agit sur le tube de montage (19).

9. Dispositif de retenue selon la revendication 8, caractérisé en ce que l'axe de montage (32) pour le levier pivotant (9) est monté, en s'étendant verticalement, sur une enveloppe (6) du dispositif de retenue (1).

10. Dispositif de retenue selon la revendication 8 ou 9, caractérisé en ce que l'axe de montage (32) pour le levier pivotant (9) est forte éloigné du tube de guidage (11) et du tube de montage (19).

11. Dispositif de retenue selon au moins l'une quelconque des revendications précédentes, caractérisé en ce que le mouvement de rotation du levier pivotant (9) s'effectue dans un plan horizontal.

12. Dispositif de retenue selon au moins l'une quelconque des revendications précédentes, caractérisé en ce que le levier pivotant (9) présente une longueur environ triple de celle du bras plus court (33).

13. Dispositif de retenue selon la revendication 8, caractérisé en ce que le bras plus court (33) porte à son extrémité libre un galet à glissement (34) qui, en passant par le passage (35), s'engage dans une rainure (36) s'étendant perpendiculairement à l'axe longitudinal du tube de montage (19).

14. Dispositif de retenue selon la revendication 13, caractérisé en ce que dans la direction radiale du tube de montage (19) la rainure (36) est plus large (b₂) que le galet à glissement.

15. Dispositif de retenue selon au moins l'une quelconque des revendications précédentes, caractérisé en ce que le tube de montage (19) est réalisé sous une forme massive (28) du côté de son extrémité éloignée du carter à bague de freinage.

**Claims**

1. Holding device flangeable onto a machine for the filling and automatic twisting off of sausages and having a brake-ring housing which is fastened to a bearing tube guided in a guide tube and, in its working position, surrounds the free end of a twisting-off nozzle of the machine and which, as a result of the actuation of a pivoting lever acting on the guide tube, can be moved away out of this working position in such a way that the free end of the twisting-off nozzle is freely accessible, characterized in that the guide tube (11) has a guide slot (13), into which engage at least two guide elements (15, 17) so offset relative to one another and fastened adjustably to the bearing tube (19) that the one guide element (15) is guided free of play on one guide edge (13a) of the slot (13) and the other guide element (17) on the opposite guide edge (13b) of the guide slot (13), in that the guide slot (13) is so formed in a first portion (A₁) that the bearing tube (19) executes a longitudinal displacement relative to the guide tube (11), and in that the guide slot (13) is formed in a second portion (A₂) in such a way that the bearing tube (19) executes a combined longitudinal and pivoting displacement movement relative to the guide tube (11).

2. Holding device according to Claim 1, characterized in that there is a detent means (21, 23, 25, 27), by means of which the bearing tube (19) is secured against longitudinal displacement in the working position.

3. Holding device according to Claim 2, characterized in that as a detent means (21) there is a spring-loaded pressure roller (23, 25) which, in the working position, engages into a catching groove (27) formed correspondingly on the bearing tube (19).

4. Holding device according to Claim 3, characterized in that the pressure roller (25) is arranged so as to be adjustable in the longitudinal direction.

5. Holding device according to Claim 3 or 4, characterized in that the pressure roller is held in a roller mounting (29) adjustable on the guide tube in the longitudinal direction.

6. Holding device according to one of the preceding claims, characterized in that rollers (15, 17) are used as guide elements.

7. Holding device according to Claim 6, characterized in that the rollers (15, 17) are mounted with adjustable eccentricity on a bearing bolt (37).

8. Holding device according to at least one of the preceding claims characterized in that in the guide tube (11) there is a perforation (35) in the form of a segment of an arc of a circle and extending concentrically relative to a bearing bolt (32) which is arranged outside the guide tube (11) and to which the pivoting lever (9) and a shorter arm (33) acting on the bearing tube (19) are articulated fixedly in terms of rotation.

9. Holding device according to Claim 8, characterized in that the bearing bolt (32) for the pivoting lever (9) is mounted vertically on a housing (6) of the holding device (1).

10. Holding device according to Claim 8 or 9, characterized in that the bearing bolt (32) for the pivoting lever (9) is arranged distant from the guide tube (11) or bearing tube (19).

11. Holding device according to at least one of the preceding claims, characterized in that the pivoting of the pivoting lever (9) takes place in a horizontal plane.

12. Holding device according to at least one of the preceding claims, characterized in that the pivoting lever (9) has approximately three times the length of the shorter arm (33).

13. Holding device according to Claim 8, characterized in that the shorter arm (33) carries, at its free end, a sliding roller (34) which engages through the perforation (35) into a groove (36) extending perpendicularly relative to the longitudinal axis of the bearing tube (19).

14. Holding device according to Claim 13, characterized in that the groove (36) is wider (b₂) than the sliding roller in the radial direction of the bearing tube (19).

15. Holding device according to at least one of the preceding claims, characterized in that the bearing tube (19) is made solid (28) towards the end facing away from the brake-ring housing.

FIG.1

1

FIG.2

FIG.5

EP 0 232 812 B1

FIG.4

FIG.3

3